# EUROPEAN PATENT SPECIFICATION

(11) **EP 1 297 029 B1**
(45) Date of publication and mention of the grant of the patent: **26.07.2006**
(21) Application number: 01932378.1
(22) Date of filing: 21.05.2001
(51) Int. Cl.: C08F 10/02, C08F 4/52, C08F 4/64, C08F 4/643, C08F 10/00, C08F 4/649

(54) **METHOD OF ETHYLENE POLYMERIZATION**
VERFAHREN ZUR ETHYLENPOLYMERISATION
PROCEDE DE POLYMERISATION D'ETHYLENE

(30) Priority: 29.05.2000 KR 2000028964
(43) Date of publication of application: 02.04.2003
(73) Proprietor: Samsung General Chemicals Co., Ltd., Seosan-shi, Chungcheongnam Province 356-870 (KR)
(72) Inventor: KIM, Sang-Yull, Seongnam-shi 463-480 (KR); YANG, Chun-Byung, Taejon 305-390 (KR); PARK, Ji-Yong, Taejon 305-390 (KR); LEE, Weon, Taejon 305-390 (KR)
(74) Representative: Laufhütte, Dieter
(86) International application number: PCT/KR2001/000836
(87) International publication number: WO 2001/092350

(56) References cited:
- EP-A- 0 970 976
- WO-A-99/35174
- KR-A- 99 051 760
- US-A- 5 122 583
- US-A- 5 990 251
- DATABASE CA [Online] CHEMICAL ABSTRACTS SERVICE, COLUMBUS, OHIO, US; 3 April 2000 (2000-04-03), LIN, SHANG'AN ET AL LIN, SHANG'AN ET AL: "Organomagnesium-triethylaluminum-n-butyl ether-silica composite-supported titanium catalyst for polymerization of ethylene Organomagnesium-triethylaluminum-n-butyl ether-silica composite-supported titanium catalyst for polymerization of ethylene" XP002308004 retrieved from STN Database accession no. 2000:212196 & CN 1 195 668 A (ZHONGSHAN UNIV., PEOP. REP. CHINA ZHONGSHAN UNIV., PEOP. REP. CHINA) 14 October 1998 (1998-10-14)

## Description

### Technical Field

The present invention relates to a method of ethylene polymerization, or more particularly, to the method of ethylene polymerization for producing polymers having broad molecular weight distribution, which comprises pre-activating a Ziegler-based catalyst for ethylene polymerization by reacting the same with an organometallic compound, and carrying out polymerization by using said activated catalyst in a slurry process.

### Background Art

Generally, polymers having broad molecular weight distribution are used industrially in the extrusion-blow molding process for producing products such as pipes, films, and sheets. On the other hand, polymers having narrow molecular weight distribution are generally used in extrusion-molding, etc. These two types of polymers are distinguished by the differences in the melt flow indexes and the molecular weight distributions. The molecular weight distribution is the ratio between the weight-average molecular weight and the number-average molecular weight.

The polymers polymerized with a Ziegler-type catalyst in a slurry or liquid-phase sole reactor commonly have narrow molecular weight distribution. The polymers having characteristics of narrow molecular weight distribution as such suffer from the limitation of tensile strength and consequently undergo changes in shape and contraction during processing. Moreover, they are difficult to apply to a process requiring high mechanical resistance in the molten state.

There has been much research into the methods for producing polymers having broad molecular weight distribution by means of using Ziegler-based catalysts, e.g., Zucchini, Ceccin *et al.,* Adv. in Polymer Science 51, pg. 101-153 (1983). There, Zucchini reported a method of polymerization in series or in multi-step by using Ziegler-Natta based catalysts in two or more reactors to obtain polymers of broad molecular weight distribution. However, the method was complicated in process and had a disadvantage of significantly reduced productivity.

With respect to the catalyst for producing polymers having broad molecular weight distribution, Altemore *et al.* in US Patent No. 3,899,477 disclosed a catalyst, which is used with titanium halide, vanadium halide and organo-aluminum compounds. This catalyst can produce polymers having broad molecular weight distribution if it is processed into the main catalyst prior to polymerizing alkylaluminum *sesqui*ethoxide and trialkylaluminum. However, the technique has a disadvantage in that it is difficult to control the polymerization process due to the following factors: a complicated catalyst production process; difficulties in controlling operational condition for the differences in the reactivities of titanium and vanadium with hydrogen, monomers and co-monomers.

Consequently, it has been very difficult to industrially produce polymers of high tensile strength with broad molecular weight distribution in a sole reactor by means of using a Ziegler-type catalyst.

### Summary of the Invention

The objective of the present invention is to provide a method of ethylene polymerization by means of using a Ziegler-based catalyst, producing ethylene polymers at a high yield, which have a molecular-weight distribution structure of broad distribution with expression of a high tail.

After much research, the inventors of the present invention discovered that the aforementioned objective could be achieved by pre-activating a typical Ziegler-based catalyst and appropriately controlling the polymerization condition therein. Accordingly, the present invention was completed in this manner.

In other words, the method of ethylene polymerization of the present invention comprises a catalyst pre-activation step of reacting a Ziegler-based catalyst with a trialkylboron compound at a certain temperature for a fixed period of time, and then a second step of injecting said pre-activated Ziegler-based catalyst and a saturated hydrocarbon containing halogen during polymerization. Accordingly, the method of the present invention, while showing high activity, leads to broadening of molecular weight distribution of the produced polymers with expression of a high tail with respect to the molecular weight distribution (i.e., it is not a normal distribution with respect to the molecular-weight distribution curve, and it forms a tail towards the direction of larger molecular weights, which is called a bimodal structure).

The ethylene polymerization as mentioned in the present invention refers not only to homo-polymerization of ethylene but also to co-polymerization of ethylene and α-olefin (e.g., 1-butene, 1-hexene, etc.).

The present invention is described in detail as below. As for the Ziegler-based catalyst used in the present invention, it could be a typical Ziegler-type catalyst, having a substrate of dichloromagnesium, dibromomagnesium, or difluoromagnesium. Its core metal is of an element of IV, V or VI Group of the Periodical Table. In the case of IV Group as a core metal, it is preferable to use dichloromagnesium as a substrate. Here, the term "typical" implies that the effects of the present invention are not limited by the catalyst components therein.

In the present invention, a typical Ziegler-based catalyst is used in the polymerization process after its pre-activation by reacting the same with a trialkylboron compound in a non-polar organic solvent.

As for the trialkylboron compound used during the catalyst pre-activation step of the present invention, triethylboran, tributylboron, trioctylboron, etc. can be used. Among them, the triethylboron compound shows the best results. The mole ratio of the core metal within the catalyst to the trialkylboron compound should be in the range of 1:1~10. It shows good results with the ratio of 1:3~7, or preferably, 1:5. If the mole ratio exceeds 1:10, it destroys the form of catalyst particles and induces a rapid reduction of activity.

As for the appropriate non-polar organic solvent used during the catalyst pre-activation step, it includes an alkane compound of hexane, N-heptane, octane, nonane, or decane; or a cycloalkane or aromatic compound. Among these compounds, hexane seems to be the best. Preferably, the solvent is used after purification so that it does not affect the catalytic activity.

The temperature of pre-activation is 0~50°C, and the duration of 3~24 hours is preferable. If the temperature exceeds the above range, it destroys the form of catalyst particles and induces a rapid reduction of catalytic activity. Moreover, if the duration for pre-activation is less than three hours, the effect of expression of a tail at the high end of molecular weight is rather weak. If the duration exceeds 24 hours, it induces a gradual reduction of catalytic activity. Preferably, the pre-activation step is carried out at 20°C for about five hours.

The method of ethylene polymerization of the present invention is carried out by injecting a Ziegler-based catalyst pre-activated by the above method along with a saturated hydrocarbon compound containing halogen into a polymerization reactor. Preferably, a co-catalyst is added thereto during the polymerization process.

As for the saturated hydrocarbon compound containing halogen, which is used during polymerization, a saturated hydrocarbon containing chlorine, bromine, etc., such as chloroform, ethylchloride, tertiary butylchloride, or tetrachloromethane can be used. Among these compounds, chloroform shows the best results. Preferably, the mole ratio of the core metal within the catalyst to the saturated hydrocarbon containing halogen should be 1:1~20. In particular, when they are used with the mole ratio of approximately 1:7, it brings about the best results. If the above ratio is less than 1:1, it is difficult to obtain the anticipated effects. If the ratio exceeds 1:20, it leads to rapid reductions of catalytic activity and hydrogen reactivity.

As for the co-catalyst which can be used in the method of ethylene polymerization of the present invention, it includes a typical co-catalyst used during ethylene polymerization, such as an organic aluminum compound, e.g., trialkylaluminum, dimethylaluminum chloride, diethylaluminum chloride, triisobutylaluminum, trimethylaluminum, dimethlylaluminum chloride, etc. As for the amount used, it is appropriate to use a mole ratio of 20 - 100 with respect to the core metal within the catalyst.

As for the molecular weight of the polymers produced by the present invention, a well-known method of control through the amount of hydrogen injected can be used. By using the method of ethylene polymerization according to the present invention, the molecular weight can be easily controlled by way of relatively small differences in the amount of hydrogen as injected therein. The above method can be confirmed by measuring the melt index of the obtained polymers.

By means of the method of polymerization of the present invention as above, the polymers of broad molecular weight distribution with expression of a high tail can be obtained. On the other hand, if the polymerization is carried out without the saturated hydrocarbon containing halogen, it produces polymers of narrow molecular weight distribution with a reduced ratio of polymers of relatively high molecular weights.

### Detailed Description of the Preferred Embodiment

The present invention is explained in detail through examples as below. Nevertheless, these examples are for illustrative purposes only and should not be construed whatsoever to limit the present invention.

The characteristics of the polymers as synthesized in the examples as below are measured by the following test method:
1. The melt index was measured at 190°C with a 2.16kg weight. The weight of the molten polymers coming out during the period of 10 minutes was expressed in grams (g/10miuntes).
2. The molecular weight distribution (MFRR) was obtained by dividing the melt index obtained with a 21.6kg weight by the melt index obtained with a 2.16kg weight. The larger the value, the broader was the molecular weight distribution.
3. The molecular weight was measured with a gel permeation chromatography (GPC). There, the weight-average molecular weight, and the Z-average molecular weight were measured. The degree of high-tail formation was expressed as a ratio (Mz/Mw) of the Z-average molecular weight measured as such to the weight-average molecular weight. The larger the value of Mz/Mw, the higher was the degree of high-tail formation.
4. The polymers obtained after polymerization were dried completely in a vacuum oven, after which their weights were measured. The polymerization activity of the catalyst was obtained by dividing the weight of the polymers as measured by the weight of the core metal (M) in the catalyst times 100 and by the duration of polymerization reaction (Kg-PE/g-M.hr).

### Example 1

### Pre-activation of catalyst

The main catalyst was prepared by means of the method introduced in Korean Patent No. 99-19193, which was as follows: First, a magnesium solution was prepared by way of contacting a halogenated magnesium compound with alcohol. Then, it was synthesized by reacting a mixture of an ester compound containing a hyndroxy group, a titanium compound, and a silicone compound in that order. There, the catalyst had the core metal of 5.0wt% of titanium.

In a glove box, 1.0g of the catalyst as produced above were subdivided into a 250ml flask having 3-directional cork and a magnetic bar. While stirring with a magnetic stirrer, 150ml of dry hexane was poured into the flask in the nitrogen atmosphere. The temperature in the flask was set to 20°C, and while stirring in the nitrogen atmosphere, 5.3 ml of 1.0M of triethylboron was added thereto. The stirring was stopped after five hours.

### Polymerization Reaction

By using a pre-activated catalyst as above, the polymerization was carried out in a 2L slurry polymerization reactor.

In the nitrogen atmosphere, 1L of dry hexane was added to the polymerization reactor. In the nitrogen atmosphere, after pouring in 3ml of a triisobutylaluminum compound (1.0M) as a co-catalyst, 2ml of ethylchloride (0.1M) was poured therein. Thereafter, 4.4ml of the catalyst slurry as pre-activated above was poured therein. After venting the nitrogen from the reactor, 500ml of hydrogen was injected. After raising the temperature to 80°C, which is the polymerization temperature, ethylene was injected at 80 psi. After carrying out the polymerization reaction for one hour, the injection of ethylene was stopped. After lowering the temperature to room temperature, the gas remaining in the reactor was vented out, and then the reactor was opened. After filtering the polymers, they were dried in a vacuum oven. The results of the polymerization test are shown in Table 1.

### Comparative Example 1

In order to understand the effect of adding a pre-activated catalyst and a saturated hydrocarbon containing halogen during polymerization, the polymerization without undergoing the step of adding ethylchloride was carried out by using a catalyst which had not undergone the catalyst pre-activation step of Example 1. The results of the polymerization test are shown in Table 1.

### Comparative Example 2

Except for carrying out the polymerization without the step of adding ethylchloride, it was carried out in the same manner as Example 1 in order to understand the effect of the saturated hydrocarbon containing halogen. The results of the polymerization test are shown in Table 1.

### Comparative Example 3

By using a catalyst, which had not undergone the catalyst pre-activation step of Example 1, the polymerization was carried out in the same manner as Example 1. The results of the polymerization test are shown in Table 1.

**Table 1**

| Type | Example 1 | C. Example 1 | C. Example 2 | C. Example 3 |
|---|---|---|---|---|
| Polymerization Activity | 7.6 | 7.6 | 7.0 | 7.5 |
| Melt Index | 0.386 | 0.444 | 0.403 | 0.694 |
| MFRR | 41.24 | 36.22 | 35.45 | 36.28 |
| Mz/Mw | 8.90 | 3.89 | 5.03 | 4.20 |

As shown in the results of Table 1; according to the method of polymerization of the present invention, it was possible to obtain polymers having a bimodal molecular-weight distribution structure by way of having broad molecular weight distribution and expression of a high tail, while maintaining a high level of polymerization activity of the catalyst. The polymers having a molecular-weight distribution structure of broad distribution and expression of a high tail tend to show high melt strength and mechanical resistance. As such, they show excellent surface characteristics, bubble stability, and other physical properties during processing. Further, since the production of thin films and lightweight products are made possible thereby, the polymers are expected to bring about the effects of reducing the amount of materials in use. In particular, when these polymers are applied to the production of pipes, it enhances the mechanical properties of extrusion processability and toughness during the molding process. As such, the creep characteristics are enhanced, which in turn is expected to enhance durability.

According to the method of polymerization of the present invention as above, it leads to the effects of producing polymers in a sole polymerization reactor, while maintaining a high level of polymerization activity, wherein said polymers have a bimodal molecular-weight distribution structure by way of having broad molecular weight distribution and expression of a high tail.

## Claims

1. A method of ethylene polymerization, which comprises pre-activating a Ziegler-based catalyst for ethylene polymerization by reacting the same with a trialkylboron compound in the presence of a non-polar organic solvent, and then carrying out polymerization by adding said pre-activated catalyst and a saturated hydrocarbon compound containing halogen.

2. The method of ethylene polymerization according of Claim 1, which comprises pre-activating said catalyst at 0~50°C for 3~24 hours.

3. The method of ethylene polymerization according of Claim 1, wherein said triallcylboron compound is triethylboron, tributylboron, or trioctylboron.

4. The method of ethylene polymerization according of Claim 1, comprising said Ziegler-based catalyst, wherein the mole ratio of the core metal thereof to the triallcylboron compound is 1:1 ~ 10.

5. The method of ethylene polymerization according of Claim 1, wherein said saturated hydrocarbon compound containing halogen is chloroform, ethylchloride, tertiary butylchloride, or tetrachloromethane.

6. The method of ethylene polymerization according of Claim 1, comprising said Ziegler-based catalyst, wherein the mole ratio of the core metal thereof to the saturated hydrocarbon compound containing halogen is 1:1~20.

7. The method of ethylene polymerization according of Claim 1, which comprises adding an organo-aluminum compound as a co-catalyst during polymerization.

8. The method of ethylene polymerization according of Claim 7, wherein said organo-aluminum compound is trialkylaluminum, dimethylaluminum chloride, diethylaluminum chloride, triisobutylaluminum, trimethylaluminum, or dimethylaluminum chloride.

## Patentansprüche

1. Verfahren zur Ethylenpolymerisation, umfassend das Voraktivieren eines Katalysators auf Ziegler-Basis zur Ethylenpolymerisation durch Umsetzen desselben mit einer Trialkylborverbindung in Gegenwart eines nicht-polaren organischen Lösungsmittels, und anschließendes Durchführen einer Polymerisation durch Zugeben des voraktivierten Katalysators und einer gesättigten Halogen-enthaltenden Kohlenwasserstoffverbindung.

2. Verfahren zur Ethylenpolymerisation nach Anspruch 1, umfassend das Voraktivieren des Katalysators bei 0 bis 50 °C über einen Zeitraum von 3 bis 24 Stunden.

3. Verfahren zur Ethylenpolymerisation nach Anspruch 1, wobei es sich bei der Trialkylborverbindung um Triethylbor, Tributylbor oder Trioctylbor handelt.

4. Verfahren zur Ethylenpolymerisation nach Anspruch 1, umfassend den Katalysator auf Ziegler-Basis, wobei das Molverhältnis des Kernmetalls davon zu der Trialkylborverbindung 1:1-10 beträgt.

5. Verfahren zur Ethylenpolymerisation nach Anspruch 1, wobei es sich bei der gesättigten Halogen-enthaltenden Kohlenwasserstoffverbindung um Chloroform, Ethylchlorid, tertiäres Butylchlorid oder Tetrachlorkohlenstoff handelt.

6. Verfahren zur Ethylenpolymerisation nach Anspruch 1, umfassend den Katalysator auf Ziegler-Basis, wobei das Molverhältnis des Kernmetalls davon zu der gesättigten Halogen-enthaltenden Kohlenwasserstoffverbindung 1:1-20 beträgt.

7. Verfahren zur Ethylenpolymerisation nach Anspruch 1, umfassend das Zugeben einer Organoaluminiumverbindung als Cokatalysator bei der Polymerisation.

8. Verfahren zur Ethylenpolymerisation nach Anspruch 7, wobei es sich bei der Organoaluminiumverbindung um Trialkylaluminium, Dimethylaluminiumchlorid, Diethylaluminiumchlorid, Triisobutylaluminium, Trimethylaluminium oder Dimethylaluminiumchlorid handelt.

## Revendications

1. Procédé de polymérisation d'éthylène, qui comprend la préactivation d'un catalyseur de type Ziegler pour la polymérisation d'éthylène, par réaction de celui-ci avec un composé trialkylbore en la présence d'un solvant organique non polaire, puis réalisation de la polymérisation par addition dudit catalyseur préactivé et un composé hydrocarbure halogéné contenant un halogène.

2. Procédé de polymérisation d'éthylène, selon la revendication 1, qui comprend la préactivation dudit catalyseur à 0-50°C pendant 3-24 heures.

3. Procédé de polymérisation d'éthylène, selon la revendication 1, dans lequel ledit composé trialkylbore est le triéthylbore, le tributylbore ou le trioctylbore.

4. Procédé de polymérisation d'éthylène, selon la revendication 1, comprenant ledit catalyseur de type Ziegler, où le rapport molaire du métal de coeur de celui-ci au composé trialkylbore est 1:1-10.

5. Procédé de polymérisation d'éthylène, selon la revendication 1, dans lequel ledit composé hydrocarbure saturé contenant un halogène est le chloroforme, le chlorure d'éthyle, le chlorure de t-butyle ou le tétrachlorométhane.

6. Procédé de polymérisation d'éthylène, selon la revendication 1, comprenant ledit catalyseur de type Ziegler, ôù le rapport molaire du métal de coeur de celui-ci au composé hydrocarbure saturé contenant un halogène est 1:1-20.

7. Procédé de polymérisation d'éthylène, selon la revendication 1, qui comprend l'addition d'un composé organique de l'aluminium comme cocatalyseur pendant la polymérisation.

8. Procédé de polymérisation d'éthylène, selon la revendication 7, dans lequel ledit composé organique de l'aluminium est un trialkylaluminium, le chlorure de diméthylaluminium, le chlorure de diéthylaluminium, le triisobutylaluminium, le triméthylaluminium, le chlorure de diméthylaluminium.
